# EUROPEAN PATENT APPLICATION

(11) **EP 4 811 722 A1**
(43) Date of publication of application: **23.09.2026**
(21) Application number: 24905795.1
(22) Date of filing: 18.10.2024
(51) Int. Cl.: H04L 9/40

(54) **SECURE MULTI-PARTY COMPUTATION METHOD AND DEVICE**

(30) Priority: 21.12.2023 CN 202311775456
(71) Applicant: Huawei Technologies Co., Ltd., Shenzhen, Guangdong 518129 (CN)
(72) Inventor: HUA, Jiafeng, Shenzhen, Guangdong 518129 (CN); XU, Xiangyi, Shenzhen, Guangdong 518129 (CN); JIN, Yier, Shenzhen, Guangdong 518129 (CN)
(74) Representative: Pfenning, Meinig & Partner mbB
(86) International application number: PCT/CN2024/125768
(87) International publication number: WO 2025/130307

(57) **Abstract**

This application provides a multi-party computation method and apparatus, and relates to the computing field, to implement multi-party computation more flexibly and improve efficiency of multi-party computation by having an MPC agent perform multi-party computation in place of a computation participant. The method includes: A first MPC agent receives a first password from a first CVM, and the first MPC agent derives a first seed based on the password; the first MPC agent generates a first random number sequence based on the first seed; the first MPC agent receives first user data from the first CVM and second user data from a second CVM; and the first MPC agent performs multi-party computation with a second MPC agent based on the first random number sequence, the first user data, the second user data, and a computation task expression, where a second random number sequence of the second MPC agent is the same as the first random number sequence, a second seed of the second MPC agent is the same as the first seed, and a second password received by the second MPC agent from the second CVM is the same as the first password.

## Description

This application claims priority to Chinese Patent Application No. 202311775456.0, filed with the China National Intellectual Property Administration on December 21, 2023 and entitled "MULTI-PARTY COMPUTATION METHOD AND APPARATUS", which is incorporated herein by reference in its entirety.

### TECHNICAL FIELD

Embodiments of this application relate to the computing field, and in particular, to a multi-party computation method and apparatus.

### BACKGROUND

In an existing multi-party computation solution, a multi-party computation (multi-party computation, MPC) protocol may be directly deployed in a trusted execution environment (trusted execution environment, TEE), to prevent an MPC execution program from being maliciously tampered with.

A trusted third party and transaction parties on both sides of data exchange are all in network software guard extensions (software guard extensions, SGX). A random number splitting module of the trusted third party distributes a random number to both of the transaction parties, and loads a computation program related to multi-party computation to a trusted execution environment. A participant mutually verifies, based on the trusted execution environment, integrity of a respective computation program related to multi-party computation with another participant; and if integrity verification of the computation program succeeds, the participant executes the computation program in the trusted execution environment and performs computation result exchange with the another participant, to complete multi-party computation.

In an existing multi-party computation solution, the trusted third party is required to distribute the random number, and a plurality of times of interaction need to be performed for each computation, resulting in high communication resource consumption, a long transaction time, and low computing efficiency.

### SUMMARY

Embodiments of this application provide a multi-party computation method and apparatus, to implement multi-party computation more flexibly and improve efficiency of multi-party computation by having an MPC agent perform multi-party computation in place of a computation participant.

According to a first aspect, an embodiment of this application provides a signal synchronization method, and the method includes: A first multi-party computation (MPC) agent receives a first password from a first user cloud virtual machine (CVM), and the first MPC agent derives a first seed based on the password; the first MPC agent generates a first random number sequence based on the first seed; the first MPC agent receives first user data from the first CVM and second user data from a second CVM; and the first MPC agent performs multi-party computation with a second MPC agent based on the first random number sequence, the first user data, the second user data, and a computation task expression, where a second random number sequence of the second MPC agent is the same as the first random number sequence, a second seed of the second MPC agent is the same as the first seed, and a second password received by the second MPC agent from the second CVM is the same as the first password.

In this possible implementation, an MPC agent performs multi-party computation in place of a computation participant, so that an MPC agent module can prove innocence, which better meets a security assumption of MPC in cryptography. Moreover, a computing resource of the MPC agent can be set based on a requirement of the computation participant, and the computing resource can be dynamically configured, so that multi-party computation can be implemented more flexibly. In addition, a password-based key delivery function is used, so that synchronization of a seed does not require interaction between MPC agents. In a scenario of a plurality of computation participants, synchronization between MPC agents can be implemented more efficiently, thereby improving efficiency of multi-party computation.

In a possible implementation, before the first MPC agent receives the first password from the first user cloud virtual machine (CVM), the method further includes: The first MPC agent receives a verification request from the first CVM, where the verification request indicates to verify whether an MPC protocol program of the first MPC agent is tampered with; and the first MPC agent sends verification information to the first CVM, where the verification information indicates that the MPC protocol program of the first MPC agent is not tampered with.

In this possible implementation, it is determined, through verification of the MPC agent, that the MPC protocol program of the MPC agent is not tampered with.

According to a second aspect, an embodiment of this application provides a signal synchronization method, and the method includes: A first user cloud virtual machine (CVM) sends a first password to a first multi-party computation (MPC) agent, where the first password is used for the first MPC agent and a second MPC agent to perform multi-party computation; and the first CVM sends first user data to the first MPC agent, and sends third user data to the second MPC agent, where the first user data and the third user data are used for the first MPC agent and the second MPC agent to perform multi-party computation.

In this possible implementation, an MPC agent performs multi-party computation in place of a computation participant, so that an MPC agent module can prove innocence, which better meets a security assumption of MPC in cryptography. Moreover, a computing resource of the MPC agent can be set based on a requirement of the computation participant, and the computing resource can be dynamically configured, so that multi-party computation can be implemented more flexibly. In addition, a password-based key delivery function is used, so that synchronization of a seed does not require interaction between MPC agents. In a scenario of a plurality of computation participants, synchronization between MPC agents can be implemented more efficiently, thereby improving efficiency of multi-party computation.

In a possible implementation, before the first CVM sends the first password to the first MPC agent, the method further includes: The first CVM configures a computing resource of the first MPC agent; and the first CVM starts the first MPC agent.

In a possible implementation, before the first CVM sends the first password to the first MPC agent, and after the first CVM starts the first MPC agent, the method further includes: The first CVM sends a verification request to the first MPC agent, where the verification request indicates to verify whether an MPC protocol program of the first MPC agent is tampered with; and the first CVM receives verification information from the first MPC agent, where the verification information indicates that the MPC protocol program of the first MPC agent is not tampered with.

In this possible implementation, it is determined, through verification of the MPC agent, that the MPC protocol program of the MPC agent is not tampered with.

According to a third aspect, an embodiment of this application provides a multi-party computation (MPC) agent apparatus, the MPC agent apparatus is configured to implement the method according to any implementation of the first aspect, and the MPC agent apparatus includes: a seed derivation module, a random number generation module, and an MPC execution module; the seed derivation module is configured to derive a first seed based on a first password, where the first seed is from a first user cloud virtual machine (CVM); the random number generation module is configured to generate a first random number sequence based on the first seed; and the MPC execution module is configured to perform multi-party computation with a second MPC agent based on the first random number sequence, first user data, second user data, and a computation task expression, where a second random number sequence of the second MPC agent is the same as the first random number sequence, a second seed of the second MPC agent is the same as the first seed, and a second password received by the second MPC agent from a second CVM is the same as the first password.

In a possible implementation, the MPC agent apparatus further includes a transceiver module, and the transceiver module is configured to: receive a verification request from the first CVM, where the verification request indicates to verify whether an MPC protocol program of the first MPC agent is tampered with; and send verification information to the first CVM, where the verification information indicates that the MPC protocol program of the first MPC agent is not tampered with.

According to a fourth aspect, an embodiment of this application provides a user cloud virtual machine (CVM), and the CVM includes a transceiver module and a user data output module; the transceiver module is configured to send a first password to a first multi-party computation (MPC) agent, where the first password is used for the first MPC agent and a second MPC agent to perform multi-party computation; and the user data output module is configured to send first user data to the first MPC agent, and send third user data to the second MPC agent, where the first user data and the third user data are used for the first MPC agent and the second MPC agent to perform multi-party computation.

In a possible implementation, the transceiver module is further configured to: configure a computing resource of the first MPC agent; and start the first MPC agent.

In a possible implementation, the transceiver module is further configured to: send a verification request to the first MPC agent, where the verification request indicates to verify whether an MPC protocol program of the first MPC agent is tampered with; and receive verification information from the first MPC agent, where the verification information indicates that the MPC protocol program of the first MPC agent is not tampered with.

According to a fifth aspect, an embodiment of this application provides a multi-party computation (MPC) agent apparatus, and the MPC agent apparatus includes: a first receiving module, configured to receive a first password from a first user cloud virtual machine (CVM); a derivation module, configured to derive a first seed based on the password; a generation module, configured to generate a first random number sequence based on the first seed; a second receiving module, configured to receive first user data from the first CVM and second user data from a second CVM; and a compute module, configured to perform multi-party computation with a second MPC agent based on the first random number sequence, the first user data, the second user data, and a computation task expression, where a second random number sequence of the second MPC agent is the same as the first random number sequence, a second seed of the second MPC agent is the same as the first seed, and a second password received by the second MPC agent from the second CVM is the same as the first password.

In a possible implementation, the MPC agent apparatus further includes: a third receiving module, configured to receive a verification request from the first CVM, where the verification request indicates to verify whether an MPC protocol program of the first MPC agent is tampered with; and a sending module, configured to send verification information to the first CVM, where the verification information indicates that the MPC protocol program of the first MPC agent is not tampered with.

According to a sixth aspect, an embodiment of this application provides a user cloud virtual machine, and the user cloud virtual machine (CVM) includes: a first sending module, configured to send a first password to a first multi-party computation (MPC) agent, where the first password is used for the first MPC agent and a second MPC agent to perform multi-party computation; and a second sending module, configured to send first user data to the first MPC agent, and send third user data to the second MPC agent, where the first user data and the third user data are used for the first MPC agent and the second MPC agent to perform multi-party computation.

In a possible implementation, the CVM further includes: a configuration module, configured to configure a computing resource of the first MPC agent; and a starting module, configured to start the first MPC agent.

In a possible implementation, the CVM further includes: a third sending module, configured to send a verification request to the first MPC agent, where the verification request indicates to verify whether an MPC protocol program of the first MPC agent is tampered with; and a receiving module, configured to receive verification information from the first MPC agent, where the verification information indicates that the MPC protocol program of the first MPC agent is not tampered with.

According to a seventh aspect, an embodiment of this application provides a multi-party computation (MPC) agent apparatus that includes a processor and a memory. The processor is coupled to the memory. The memory is configured to store computer instructions. The computer instructions are loaded and executed by the processor, to enable the MPC agent apparatus to implement any method provided in the first aspect.

According to an eighth aspect, an embodiment of this application provides a user cloud virtual machine that includes a processor and a memory. The processor is coupled to the memory. The memory is configured to store computer instructions, and the computer instructions are loaded and executed by the processor, to enable the user cloud virtual machine to implement any method provided in the second aspect.

According to a ninth aspect, an embodiment of this application provides a chip. The chip includes a processor and an interface circuit. The interface circuit is configured to receive code instructions and transmit the code instructions to the processor. The processor is configured to run the code instructions to perform any method provided in the first aspect.

According to a tenth aspect, an embodiment of this application provides a chip. The chip includes a processor and an interface circuit. The interface circuit is configured to receive code instructions and transmit the code instructions to the processor. The processor is configured to run the code instructions to perform any method provided in the second aspect.

According to an eleventh aspect, an embodiment of this application provides a computer-readable storage medium. The computer-readable storage medium stores at least one computer program instruction, and the computer program instruction is loaded and executed by a processor to implement any method provided in the first aspect.

According to a twelfth aspect, an embodiment of this application provides a computer-readable storage medium. The computer-readable storage medium stores at least one computer program instruction, and the computer program instruction is loaded and executed by a processor to implement any method provided in the second aspect.

According to a thirteenth aspect, an embodiment of this application provides a computer program product that includes computer-executable instructions. When the computer-executable instructions are run on a computer, the computer is enabled to perform any method provided in the first aspect.

According to a fourteenth aspect, an embodiment of this application provides a computer program product that includes computer-executable instructions. When the computer-executable instructions are run on a computer, the computer is enabled to perform any method provided in the second aspect.

For technical effect achieved by any implementation of the third aspect to the fourteenth aspect, refer to technical effect achieved by a corresponding implementation of the first aspect or the second aspect. Details are not described herein again.

### BRIEF DESCRIPTION OF DRAWINGS

FIG. 1 is a diagram of a scenario of a multi-party computation method;
FIG. 2 is a diagram of an architecture of a multi-party computation method according to an embodiment of this application;
FIG. 3 is a schematic flowchart of a multi-party computation method according to an embodiment of this application;
FIG. 4 is a diagram of a scenario of a multi-party computation method according to an embodiment of this application;
FIG. 5 is a diagram of a structure of an MPC agent apparatus according to an embodiment of this application;
FIG. 6 is a diagram of a structure of a user cloud virtual machine according to an embodiment of this application;
FIG. 7 is a diagram of a structure of another MPC agent apparatus according to an embodiment of this application;
FIG. 8 is a diagram of a structure of another user cloud virtual machine according to an embodiment of this application; and
FIG. 9 is a diagram of a structure of a multi-party computation system according to an embodiment of this application.

### DESCRIPTION OF EMBODIMENTS

In the description of this application, "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural.

In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference.

In embodiments of this application, terms such as "example" or "for example" represent giving an example, an illustration, or a description. Any embodiment or design solution described as an "example" or "for example" in embodiments of this application should not be explained as being more preferred or having more advantages than another embodiment or design solution. Exactly, the word such as "example" or "for example" is used to present a related concept in a specific manner for ease of understanding.

It may be understood that, an "embodiment" mentioned throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, mutual reference may be made between same or similar parts of various embodiments. In embodiments of this application, unless otherwise specified or a logical conflict occurs, terms and/or descriptions in different embodiments are consistent and may be mutually referenced, and different embodiments may be combined based on an internal logical relationship between embodiments to form a new embodiment. The following implementations of this application are not intended to limit the protection scope of this application.

A value of data can be maximized only through exchange and sharing. However, a problem of privacy leakage has great adverse impact on a value of a data resource. How to securely and efficiently analyze and use decentralized data resources of different owners when data security is ensured is a major challenge for data value monetization. A multi-party computation technology is a key technology for implementing secure data circulation, and can implement that in a case in which a group of mutually independent data owners do not trust each other, data of each data owner is used as an input to complete calculation of a function, and the input data is not exposed in a calculation process.

In an existing multi-party computation solution, a multi-party computation (multi-party computation, MPC) protocol may be directly deployed in a trusted execution environment (trusted execution environment, TEE), to prevent an MPC execution program from being maliciously tampered with, and to improve multi-party computation suitable for a semi-honest attack model to multi-party computation suitable for a malicious attack model.

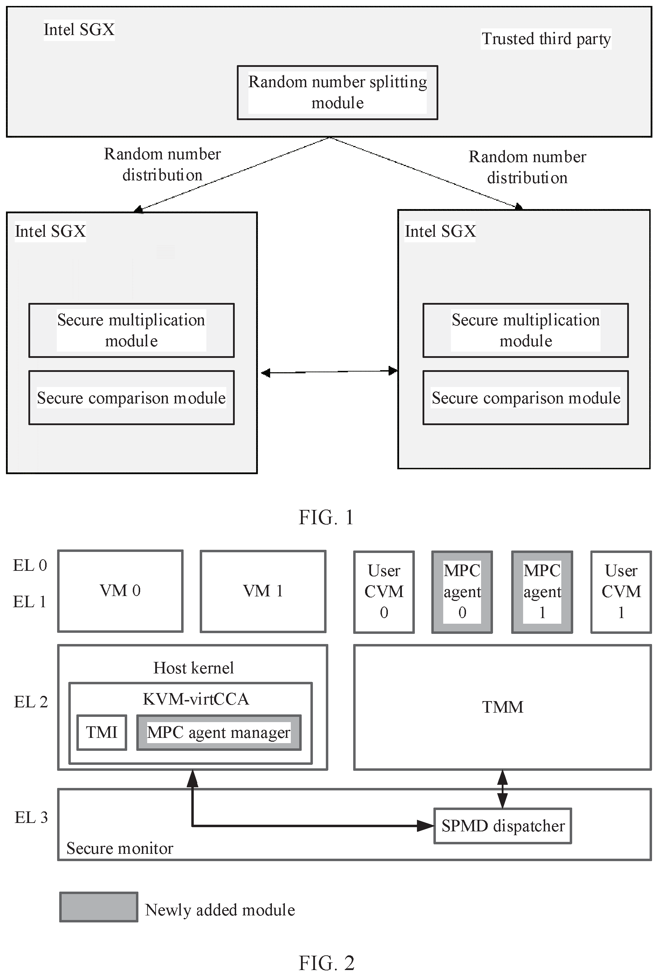

As shown in FIG. 1, a trusted third party and transaction parties on both sides of data exchange are all in network software guard extensions (software guard extensions, SGX). A random number splitting module of the trusted third party distributes a random number to both of the transaction parties, and loads a computation program related to multi-party computation to a trusted execution environment. A participant mutually verifies, based on the trusted execution environment, integrity of a respective computation program related to multi-party computation with another participant; and if integrity verification of the computation program succeeds, the participant executes the computation program in the trusted execution environment and performs computation result exchange with the another participant, to complete multi-party computation.

In an existing multi-party computation solution, the trusted third party is required to distribute the random number, and a plurality of times of interaction need to be performed for each computation, resulting in high communication resource consumption and a long transaction time.

In view of this, an embodiment of this application provides a multi-party computation method. The method includes: A first multi-party computation (MPC) agent receives a first password from a first user cloud virtual machine (CVM), and the first MPC agent derives a first seed based on the password; the first MPC agent generates a first random number sequence based on the first seed; the first MPC agent receives first user data from the first CVM and second user data from a second CVM; and the first MPC agent performs multi-party computation with a second MPC agent based on the first random number sequence, the first user data, the second user data, and a computation task expression, where a second random number sequence of the second MPC agent is the same as the first random number sequence, a second seed of the second MPC agent is the same as the first seed, and a second password received by the second MPC agent from the second CVM is the same as the first password.

The multi-party computation method provided in this embodiment of this application may be applicable to a communication system shown in FIG. 2. Exception level (exception level, EL) 0 and EL 1 of the communication system include a virtual machine (virtual machine, VM) 0, a VM 1, a user cloud virtual machine (cloud virtual machine, CVM) 0, a multi-party computation agent (MPC agent) 0, a user CVM 1, and an MPC agent 0. An MPC agent is in a one-to-one correspondence with a user CVM. The MPC agent is a part of a confidential computing architecture (confidential computing architecture, CCA) software stack. A function of the MPC agent is fixed, and is similar to a migration agent (Migration agent) of secure encrypted virtualization (secure encrypted virtualization, SEV) or a Quoting Enclave of software guard extensions (SGX). The MPC agent can only perform MPC, code can be open-source, and remote verification can be performed.

An EL 2 of the communication system includes a TMM and a host kernel (Host kernel), and a kernel-based virtual machine (KVM-virtCCA) of the host kernel includes a trustzone management interface (trustzone management interface, TMI) and a multi-party computation agent manager (MPC agent manager). A computation participant may configure a resource of a compute node of the MPC agent by using the MPC agent manager based on a computing requirement.

An EL 3 of the communication system includes a security monitor (secure monitor), and the security monitor includes a single program multiple data (single program multiple data, SPMD) dispatcher (dispatcher).

In this embodiment of this application, an MPC agent module and an MPC agent manager module are newly added to the communication system, to implement an agent for multi-party computation, thereby implementing secure interaction more efficiently.

It may be understood that, in embodiments of this application, an execution body may perform some or all of steps in embodiments of this application. These steps or operations are merely examples. Other operations or variants of various operations may be further performed in embodiments of this application. In addition, the steps may be performed in a sequence different from a sequence presented in embodiments of this application, and it is possible that not all operations in embodiments of this application need to be performed.

It should be noted that, in the following embodiments of this application, names of messages or names of parameters in messages between devices are merely examples, and the messages or the parameters may have other names in specific implementations. This is not specifically limited in embodiments of this application.

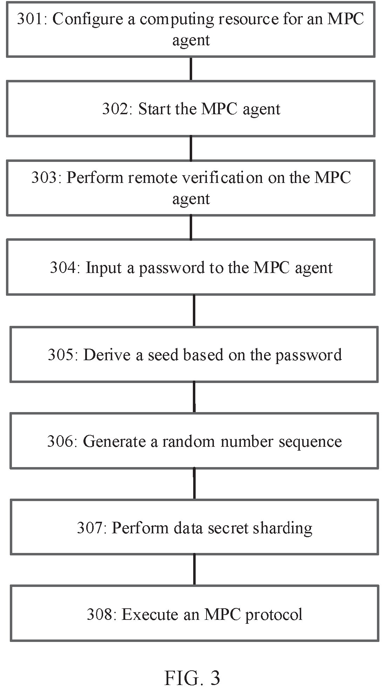

FIG. 3 shows a secure interaction method according to an embodiment of this application. The method includes the following steps.

In an offline phase, the secure interaction method provided in this embodiment of this application may include the following steps.

301: Configure a computing resource for an MPC agent.

Each computation participant configures a computing resource of an MPC agent by using an MPC agent manager and deploys an MPC program.

In this embodiment of this application, the MPC agent manager may configure a resource of a compute node of the MPC agent based on a computing requirement. Therefore, a user Alice may configure a computing resource of an MPC agent 0 by using the MPC agent manager, and a user Bob may configure a computing resource of an MPC agent 1 by using the MPC agent manager.

302: Start the MPC agent.

Each computation participant starts the MPC agent by using a corresponding CVM, and each MPC agent is in a one-to-one correspondence with a CVM.

Specifically, for example, the user Alice starts the MPC agent 0 by using a CVM 0, and the user Bob starts the MPC agent 0 by using a CVM 1.

303: Perform remote verification on the MPC agent.

Each computation participant performs remote verification on a corresponding MPC agent to ensure that an MPC protocol program in the MPC agent is not tampered with.

Specifically, for example, the MPC agent 0 receives a verification request from the CVM 0, where the verification request indicates to verify whether an MPC protocol program of the MPC agent 0 is tampered with. After performing verification, the MPC agent 0 determines that the MPC protocol program is not tampered with, and the MPC agent 0 sends verification information to the CVM 0, where the verification information indicates that the MPC protocol program of the MPC agent 0 is not tampered with.

304: Input a password to the MPC agent.

Each participant inputs a same password to the corresponding MPC agent by using a password input module in the CVM.

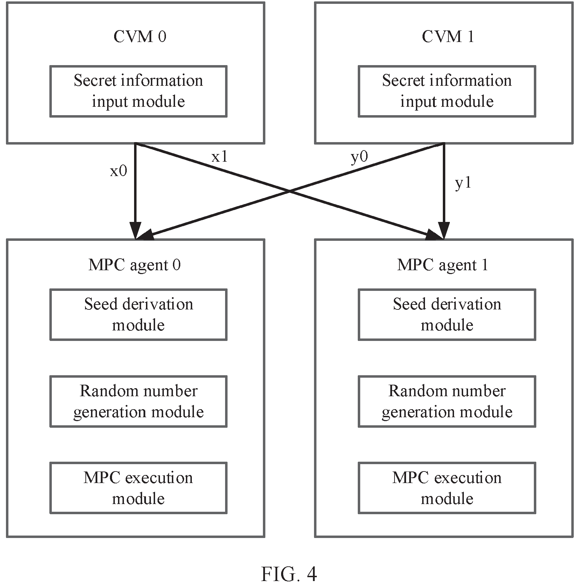

Specifically, as shown in FIG. 4, the user Alice inputs a first password to the corresponding MPC agent 0 by using the password input module of the CVM 1. The user Bob inputs a second password to the corresponding MPC agent 1 by using the password input module of the CVM 2, and the first password is the same as the second password.

In this embodiment of this application, the password may be password information in a form of a character string, a number, a verification code, or the like, or may be a password of another type, for example, corpus information. This is not specifically limited herein. It may be understood that, in this embodiment of this application, the password sent by the CVM to the MPC agent is information used to derive a seed. Therefore, all information that can be used to derive the seed may be used as the password in this embodiment of this application. This is not specifically limited herein.

305: Derive a seed based on the password.

After each MPC agent receives a password from a corresponding CVM, a seed derivation module in the MPC agent may derive a corresponding seed. Because passwords received by the MPC agents are the same, and derivation algorithms adopted by the MPC agents are also the same, seeds derived by the MPC agents are also the same.

Specifically, for example, as shown in FIG. 4, after the MPC agent 0 receives a password from the CVM 1, the seed derivation module of the MPC agent 0 may derive a seed 1 by using a derivation algorithm based on the received password and a time stamp TimeStamp. After the MPC agent 1 receives a password from the CVM 2, the seed derivation module of the MPC agent 1 may derive a seed 2 by using a derivation algorithm based on the received password and a time stamp TimeStamp. Because the passwords received by the MPC agent 0 and the MPC agent 1 are the same, and the derivation algorithms adopted by the MPC agent 0 and the MPC agent 1 are also the same, the seed 1 and the seed 2 derived by the MPC agent 0 and the MPC agent 1 are also the same.

In this embodiment of this application, a password-based key delivery function is used, so that synchronization of a seed does not require interaction between MPC agents. In a scenario of a plurality of computation participants, synchronization between MPC agents can be implemented more efficiently, thereby improving efficiency of multi-party computation.

306: Generate a random number sequence.

After each MPC agent derives the seed, a random number generation module of the MPC agent generates a random number sequence based on the derived seed. Because the seeds derived by the MPC agents are the same, generated random number sequences are also the same.

Specifically, for example, the random number generation module of the MPC agent 0 generates a first random number sequence based on the derived seed 1, and the random number generation module of the MPC agent 1 generates a second random number sequence based on the derived seed 2, and the generated first random number sequence and the generated second random number sequence are the same.

307: Perform data secret sharding.

Each computation participant performs secret sharding on data that belongs to the computation participant and sends secret sharded data to the MPC agent.

Specifically, for example, the CVM 0 may encrypt data x that belongs to the CVM 0, generate secret data x0 and x1, send the secret data x0 to the MPC agent 0, and send the secret data x1 to the MPC agent 1. The CVM 1 may encrypt data y that belongs to the CVM 1, generate secret data y0 and y1, send the secret data y0 to the MPC agent 0, and send the secret data y1 to the MPC agent 1.

It may be understood that, in this embodiment of this application, each CVM may encrypt data that belongs to the CVM and then send encrypted data to each MPC agent in a system. For example, there are three MPC agents in the system: the MPC agent 0, the MPC agent 1, and an MPC agent 2. The CVM 0 may send the secret data x0 to the MPC agent 0, send the secret data x1 to the MPC agent 1, and send secret data x2 to the MPC agent 2.

308: Execute an MPC protocol.

An MPC execution module of each MPC agent jointly executes the MPC protocol based on the random number sequence, user secret sharded data, and a computation task expression.

Specifically, the MPC execution module of the MPC agent 0 performs multi-party computation between the MPC agent 0 and the MPC agent 1 based on the first random number sequence, user secret sharded data, and the computation task expression, and the MPC execution module of the MPC agent 1 performs multi-party computation between the MPC agent 0 and the MPC agent 1 based on the second random number sequence, user secret sharded data, and the computation task expression.

In this embodiment of this application, a password-based key delivery function is used, so that synchronization of a seed does not require interaction between MPC agents. In a scenario of a plurality of computation participants, synchronization between MPC agents can be implemented more efficiently, thereby improving efficiency of multi-party computation. In addition, an MPC agent performs multi-party computation in place of a computation participant, so that an MPC agent module can prove innocence, which better meets a security assumption of MPC in cryptography. Moreover, a computing resource of the MPC agent can be set based on a requirement of the computation participant, and the computing resource can be dynamically configured, so that multi-party computation can be implemented more flexibly.

An embodiment of this application provides an MPC agent apparatus 500. In this embodiment of this application, the MPC agent apparatus 500 may be divided into functional modules based on the foregoing method example. For example, each functional module may be obtained through division based on each corresponding function, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

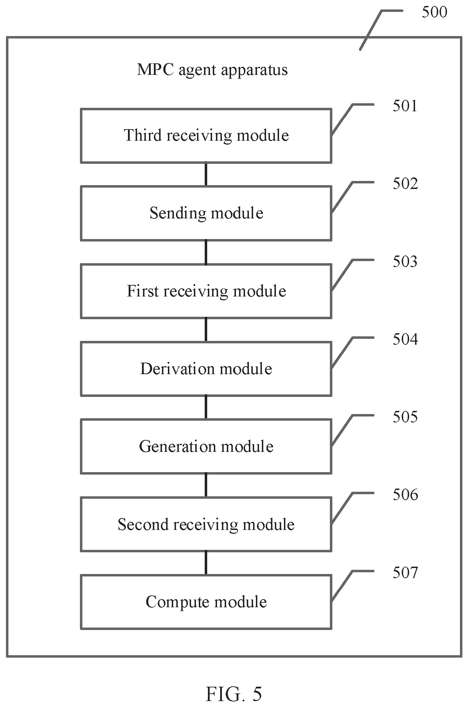

When each functional module is obtained through division based on each corresponding function, FIG. 5 is a diagram of a possible structure of the MPC agent apparatus 500 in the foregoing embodiment. As shown in FIG. 5, the MPC agent apparatus 500 includes:
a third receiving module 501, configured to receive a verification request from a first CVM, where the verification request indicates to verify whether an MPC protocol program of a first MPC agent is tampered with, for example, step 303: Perform remote verification on the MPC agent;
a sending module 502, configured to send verification information to the first CVM, where the verification information indicates that the MPC protocol program of the first MPC agent is not tampered with, for example, step 303: Perform remote verification on the MPC agent;
a first receiving module 503, configured to receive a first password from the first user cloud virtual machine (CVM), for example, step 304: Input a password to the MPC agent;
a derivation module 504, configured to derive a first seed based on the password, for example, Step 305: Derive a seed based on the password;
a generation module 505, configured to generate a first random number sequence based on the first seed, for example, step 306: Generate a first random number sequence;
a second receiving module 506, configured to receive first user data from the first CVM and second user data from a second CVM, for example, step 307: Perform data secret sharding; and
a compute module 507, configured to perform multi-party computation with a second MPC agent based on the first random number sequence, the first user data, the second user data, and a computation task expression, where a second random number sequence of the second MPC agent is the same as the first random number sequence, a second seed of the second MPC agent is the same as the first seed, and a second password received by the second MPC agent from the second CVM is the same as the first password, for example, step 308: Execute an MPC protocol.

The modules of the non-linear compensation apparatus may be further configured to perform other actions in the method embodiment. All related content of the steps in the method embodiment may be cited to function descriptions of corresponding functional modules. Details are not described herein again.

An embodiment of this application provides a user cloud virtual machine (CVM) 600. In this embodiment of this application, the CVM 600 may be divided into functional modules based on the foregoing method example. For example, each functional module may be obtained through division based on each corresponding function, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

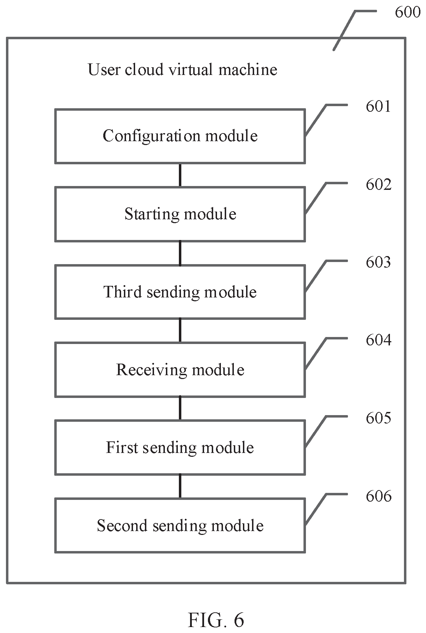

When each functional module is obtained through division based on each corresponding function, FIG. 6 is a diagram of a possible structure of the CVM 600 in the foregoing embodiment. As shown in FIG. 6, the CVM 600 includes:
a configuration module 601, configured to configure a computing resource of a first MPC agent, for example, step 301: Configure a computing resource for an MPC agent;
a starting module 602, configured to start the first MPC agent, for example, step 302: Start the MPC agent;
a third sending module 603, configured to send a verification request to the first MPC agent, where the verification request indicates to verify whether an MPC protocol program of the first MPC agent is tampered with, for example, step 303: Perform remote verification on the MPC agent;
a receiving module 604, configured to receive verification information from the first MPC agent, where the verification information indicates that the MPC protocol program of the first MPC agent is not tampered with, for example, step 303: Perform remote verification on the MPC agent;
a first sending module 605, configured to send a first password to the first multi-party computation (MPC) agent, where the first password is used for the first MPC agent and the second MPC agent to perform multi-party computation, for example, step 305: Input a password to the MPC agent; and
a second sending module 606, configured to send first user data to the first MPC agent, and send third user data to the second MPC agent, where the first user data and the third user data are used for the first MPC agent and the second MPC agent to perform multi-party computation, for example, step 307: Perform data secret sharding.

The modules of the non-linear compensation apparatus may be further configured to perform other actions in the method embodiment. All related content of the steps in the method embodiment may be cited to function descriptions of corresponding functional modules. Details are not described herein again.

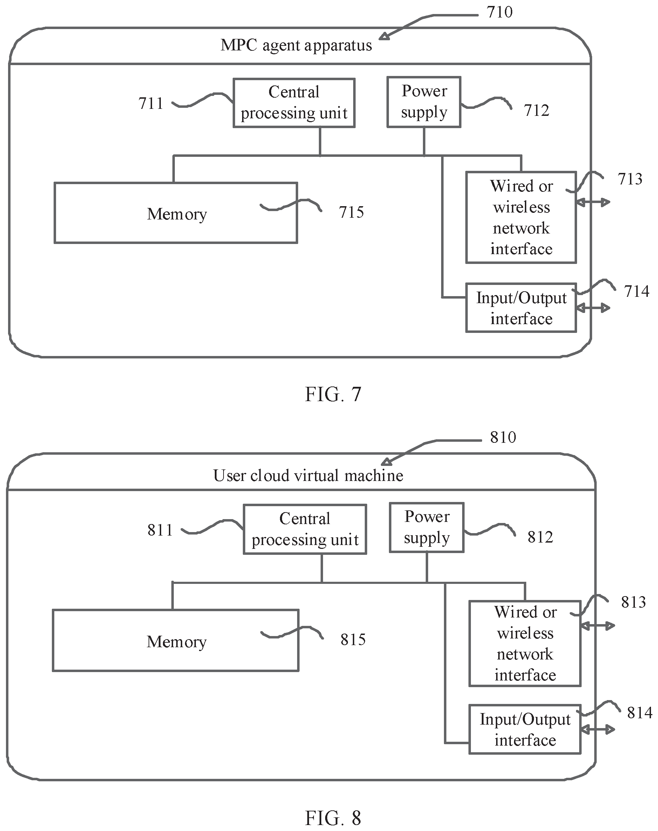

FIG. 7 is a diagram of a structure of an MPC agent apparatus according to an embodiment of this application. The MPC agent apparatus 700 may include one or more central processing units (central processing units, CPUs) 701 and a memory 705. The memory 705 stores one or more application programs or data.

The memory 705 may be volatile storage or persistent storage. The program stored in the memory 705 may include one or more modules, and each module may include a series of instruction operations on the MPC agent apparatus. Further, the central processing unit 701 may be configured to communicate with the memory 705, and perform the series of instruction operations in the memory 705 on the MPC agent apparatus 700.

The central processing unit 701 is configured to execute the computer program in the memory 705, to enable the MPC agent apparatus 700 to perform the following: A first multi-party computation (MPC) agent receives a first password from a first user cloud virtual machine (CVM), and the first MPC agent derives a first seed based on the password; the first MPC agent generates a first random number sequence based on the first seed; the first MPC agent receives first user data from the first CVM and second user data from a second CVM; and the first MPC agent performs multi-party computation with a second MPC agent based on the first random number sequence, the first user data, the second user data, and a computation task expression, where a second random number sequence of the second MPC agent is the same as the first random number sequence, a second seed of the second MPC agent is the same as the first seed, and a second password received by the second MPC agent from the second CVM is the same as the first password. For a specific implementation, refer to step 301 to step 308 in the embodiment shown in FIG. 3. Details are not described herein again.

The MPC agent apparatus 700 may further include one or more power supplies 702, one or more wired or wireless network interfaces 703, one or more input/output interfaces 704, and/or one or more operating systems, such as Windows ServerTM, Mac OS XTM, UnixTM, LinuxTM, and FreeBSDTM.

The MPC agent apparatus 700 may perform the operations performed by the MPC agent apparatus in the embodiment shown in FIG. 3, and details are not described herein again.

FIG. 8 is a diagram of a structure of a CVM according to an embodiment of this application. The CVM 800 may include one or more central processing units (central processing units, CPU) 801 and a memory 805. The memory 805 stores one or more application programs or data.

The memory 805 may be volatile storage or persistent storage. The program stored in the memory 805 may include one or more modules, and each module may include a series of instruction operations on the CVM. Further, the central processing unit 801 may be configured to communicate with the memory 805, and perform the series of instruction operations in the memory 805 on the CVM 800.

The central processing unit 801 is configured to execute the computer program in the memory 805, to enable the CVM 800 to perform the following: A first user cloud virtual machine (CVM) sends a first password to a first multi-party computation (MPC) agent, where the first password is used for the first MPC agent and a second MPC agent to perform multi-party computation; and the first CVM sends first user data to the first MPC agent, and sends third user data to the second MPC agent, where the first user data and the third user data are used for the first MPC agent and the second MPC agent to perform multi-party computation. For a specific implementation, refer to step 301 to step 308 in the embodiment shown in FIG. 3. Details are not described herein again.

The CVM 800 may further include one or more power supplies 802, one or more wired or wireless network interfaces 803, one or more input/output interfaces 804, and/or one or more operating systems, such as Windows ServerTM, Mac OS XTM, UnixTM, LinuxTM, and FreeBSDTM.

The CVM 800 may perform the operations performed by the CVM in the embodiment shown in FIG. 3. Details are not described herein again.

An embodiment of this application further provides a computer program product that includes instructions. The computer program product may be software or a program product that includes the instructions and that can be run on a plug-in result reuse apparatus or be stored in any usable medium. When the computer program product is run on the plug-in result reuse apparatus, an MPC agent apparatus is enabled to perform the multi-party computation method performed in the embodiment shown in FIG. 3.

An embodiment of this application further provides a computer program product that includes instructions. The computer program product may be software or a program product that includes the instructions and that can be run on a plug-in result reuse apparatus or be stored in any usable medium. When the computer program product is run on the plug-in result reuse apparatus, a CVM is enabled to perform the multi-party computation method performed in the embodiment shown in FIG. 3.

Embodiments of this application further provide a computer-readable storage medium. The computer-readable storage medium may be any usable medium that can be stored by a cache server, or a data storage device, like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions indicate an MPC agent apparatus to perform the multi-party computation method performed in the embodiment shown in FIG. 3.

Embodiments of this application further provide a computer-readable storage medium. The computer-readable storage medium may be any usable medium that can be stored by a cache server, or a data storage device, like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions indicate a CVM to perform the multi-party computation method performed in the embodiment shown in FIG. 3.

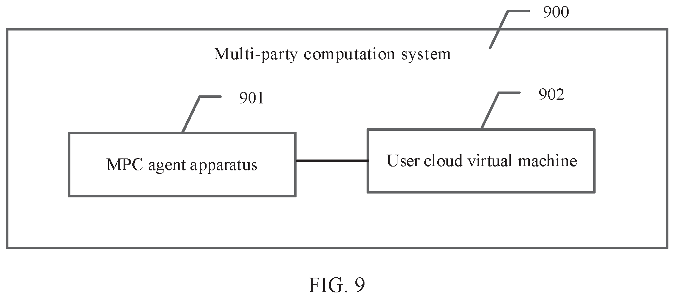

As shown in FIG. 9, an embodiment of this application provides a multi-party computation system 900. The multi-party computation system 900 includes a multi-party computation (MPC) agent apparatus 901 and a user cloud virtual machine 902. The MPC agent apparatus 901 may implement the multi-party computation method performed in the embodiment shown in FIG. 3, and the user cloud virtual machine 902 may implement the multi-party computation method performed in the embodiment shown in FIG. 3.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some procedures (or functions) of embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a plurality. A single processor or another unit may implement several functions enumerated in the claims. Some measures are recorded in dependent claims that are different from each other, but this does not mean that these measures cannot be combined to produce a better effect.

## Claims

1. A multi-party computation method, wherein the method comprises:
receiving, by a first multi-party computation MPC agent, a first password from a first user cloud virtual machine CVM;
deriving, by the first MPC agent, a first seed based on the first password;
generating, by the first MPC agent, a first random number sequence based on the first seed;
receiving, by the first MPC agent, first user data from the first CVM and second user data from a second CVM; and
performing, by the first MPC agent, multi-party computation with a second MPC agent based on the first random number sequence, the first user data, the second user data, and a computation task expression, wherein a second random number sequence of the second MPC agent is the same as the first random number sequence, a second seed of the second MPC agent is the same as the first seed, and a second password received by the second MPC agent from the second CVM is the same as the first password.

2. The method according to claim 1, wherein before receiving, by the first MPC agent, the first password from the first user cloud virtual machine CVM, the method further comprises:
receiving, by the first MPC agent, a verification request from the first CVM, wherein the verification request indicates to verify whether an MPC protocol program of the first MPC agent is tampered with; and
sending, by the first MPC agent, verification information to the first CVM, wherein the verification information indicates that the MPC protocol program of the first MPC agent is not tampered with.

3. A multi-party computation method, wherein the method comprises:
sending, by a first user cloud virtual machine CVM, a first password to a first multi-party computation MPC agent, wherein the first password is used for the first MPC agent and a second MPC agent to perform multi-party computation; and
sending, by the first CVM, first user data to the first MPC agent, and sending third user data to the second MPC agent, wherein the first user data and the third user data are used for the first MPC agent and the second MPC agent to perform multi-party computation.

4. The method according to claim 3, wherein before sending, by the first CVM, the first password to the first MPC agent, the method further comprises:
configuring, by the first CVM, a computing resource of the first MPC agent; and
starting, by the first CVM, the first MPC agent.

5. The method according to claim 4, wherein before sending, by the first CVM, the first password to the first MPC agent, and after starting, by the first CVM, the first MPC agent, the method further comprises:
sending, by the first CVM, a verification request to the first MPC agent, wherein the verification request indicates to verify whether an MPC protocol program of the first MPC agent is tampered with; and
receiving, by the first CVM, verification information from the first MPC agent, wherein the verification information indicates that the MPC protocol program of the first MPC agent is not tampered with.

6. A multi-party computation MPC agent apparatus, wherein the MPC agent apparatus is configured to implement the method according to claim 1 or 2, and the MPC agent apparatus comprises: a seed derivation module, a random number generation module, and an MPC execution module;
the seed derivation module is configured to derive a first seed based on a first password, wherein the first seed is from a first user cloud virtual machine CVM;
the random number generation module is configured to generate a first random number sequence based on the first seed; and
the MPC execution module is configured to perform multi-party computation with a second MPC agent based on the first random number sequence, the first user data, the second user data, and a computation task expression, wherein a second random number sequence of the second MPC agent is the same as the first random number sequence, a second seed of the second MPC agent is the same as the first seed, and a second password received by the second MPC agent from a second CVM is the same as the first password.

7. The MPC agent apparatus according to claim 6, wherein the MPC agent apparatus further comprises a transceiver module, and the transceiver module is configured to:
receive a verification request from the first CVM, wherein the verification request indicates to verify whether an MPC protocol program of the first MPC agent is tampered with; and
send verification information to the first CVM, wherein the verification information indicates that the MPC protocol program of the first MPC agent is not tampered with.

8. A user cloud virtual machine CVM, wherein the CVM comprises a transceiver module and a user data output module;
the transceiver module is configured to send a first password to a first multi-party computation MPC agent, wherein the first password is used for the first MPC agent and a second MPC agent to perform multi-party computation; and
the user data output module is configured to send first user data to the first MPC agent, and send third user data to the second MPC agent, wherein the first user data and the third user data are used for the first MPC agent and the second MPC agent to perform multi-party computation.

9. The CVM according to claim 8, wherein the transceiver module is further configured to:
configure a computing resource of the first MPC agent; and
start the first MPC agent.

10. The CVM according to claim 9, wherein the transceiver module is further configured to:
send a verification request to the first MPC agent, wherein the verification request indicates to verify whether an MPC protocol program of the first MPC agent is tampered with; and
receive verification information from the first MPC agent, wherein the verification information indicates that the MPC protocol program of the first MPC agent is not tampered with.

11. A multi-party computation MPC agent apparatus, wherein the MPC agent apparatus comprises:
a first receiving module, configured to receive a first password from a first user cloud virtual machine CVM;
a derivation module, configured to derive a first seed based on the password;
a generation module, configured to generate a first random number sequence based on the first seed;
a second receiving module, configured to receive first user data from the first CVM and second user data from a second CVM; and
a compute module, configured to perform multi-party computation with a second MPC agent based on the first random number sequence, the first user data, the second user data, and a computation task expression, wherein a second random number sequence of the second MPC agent is the same as the first random number sequence, a second seed of the second MPC agent is the same as the first seed, and a second password received by the second MPC agent from the second CVM is the same as the first password.

12. The MPC agent apparatus according to claim 11, wherein the MPC agent apparatus further comprises:
a third receiving module, configured to receive a verification request from the first CVM, wherein the verification request indicates to verify whether an MPC protocol program of the first MPC agent is tampered with; and
a sending module, configured to send verification information to the first CVM, wherein the verification information indicates that the MPC protocol program of the first MPC agent is not tampered with.

13. A user cloud virtual machine, wherein the user cloud virtual machine CVM comprises:
a first sending module, configured to send a first password to a first multi-party computation MPC agent, wherein the first password is used for the first MPC agent and a second MPC agent to perform multi-party computation; and
a second sending module, configured to send first user data to the first MPC agent, and send third user data to the second MPC agent, wherein the first user data and the third user data are used for the first MPC agent and the second MPC agent to perform multi-party computation.

14. The cloud virtual machine according to claim 13, wherein the CVM further comprises:
a configuration module, configured to configure a computing resource of the first MPC agent; and
a starting module, configured to start the first MPC agent.

15. The cloud virtual machine according to claim 14, wherein the CVM further comprises:
a third sending module, configured to send a verification request to the first MPC agent, wherein the verification request indicates to verify whether an MPC protocol program of the first MPC agent is tampered with; and
a receiving module, configured to receive verification information from the first MPC agent, wherein the verification information indicates that the MPC protocol program of the first MPC agent is not tampered with.

16. A multi-party computation MPC agent apparatus, wherein the MPC agent apparatus comprises a processor and a memory, the processor is coupled to the memory, the memory is configured to store computer instructions, and the computer instructions are loaded and executed by the processor, to enable the MPC agent apparatus to implement the method according to claim 1 or 2.

17. A user cloud virtual machine, wherein the user cloud virtual machine comprises a processor and a memory, the processor is coupled to the memory, the memory is configured to store computer instructions, and the computer instructions are loaded and executed by the processor, to enable the user cloud virtual machine to implement the method according to any one of claims 3 to 5.

18. A computer-readable storage medium, wherein the computer-readable storage medium stores at least one computer program instruction, and the computer program instruction is loaded and executed by a processor to implement the method according to claim 1 or 2.

19. A computer-readable storage medium, wherein the computer-readable storage medium stores at least one computer program instruction, and the computer program instruction is loaded and executed by a processor to implement the method according to any one of claims 3 to 5.

20. A computer program product, wherein the computer program product comprises computer-executable instructions, and when the computer-executable instructions are run on a computer, the computer is configured to implement the method according to claim 1 or 2.

21. A computer program product, wherein the computer program product comprises computer-executable instructions, and when the computer-executable instructions are run on a computer, the computer is configured to implement the method according to any one of claims 3 to 5.

22. A multi-party computation system, wherein the multi-party computation system comprises a multi-party computation MPC agent apparatus and a user cloud virtual machine, the MPC agent apparatus may implement the method according to claim 1 or 2, and the user cloud virtual machine may implement the method according to any one of claims 3 to 5.
